# EUROPÄISCHE PATENTSCHRIFT

(11) **EP 0 558 917 B1**
(45) Veröffentlichungstag und Bekanntmachung des Hinweises auf die Patenterteilung: **13.12.1995**
(21) Anmeldenummer: 93101258.7
(22) Anmeldetag: 28.01.1993
(51) Int. Cl.: B01D 46/24, C08L 83/04

(54) **Filtervorrichtung mit Gehäuse und in dem Gehäuse befindlichen Filterelementen**
Filter apparatus comprising a casing with filter elements
Appareil de filtration comprenant un caisson avec des éléments de filtrage

(30) Priorität: 06.03.1992 DE 4207023
(43) Veröffentlichungstag der Anmeldung: 08.09.1993
(73) Patentinhaber: SCHLICK-Roto-Jet Maschinenbau GmbH, D-48629 Metelen (DE)
(72) Erfinder: Schlick, Horst-Dieter, W-4439 Metelen (DE)
(74) Vertreter: Hoffmeister, Helmut, Dr. Dipl.-Phys.

(56) Entgegenhaltungen:
- EP-A- 0 398 091
- US-A- 4 767 427
- US-A- 4 871 380

## Beschreibung

Die Erfindung betrifft eine Filtervorrichtung zur Reinigung von mit Partikeln verunreinigter Luft oder anderer Gase, mit folgenden Einzelteilen:
a) einem kastenförmigen Gehäuse mit einer Vorderwand, die mit einer Vielzahl von Filter-Zugängen ausgestattet ist,
b) einer Vielzahl von Filterelementen, die im wesentlichen vom Mantel her permeable Hohlzylinder darstellen, die jeweils mit ihrer Vorderseite im Bereich eines Filter-Zugangs festlegbar sind und im eingebauten Zustand unter Wahrung gegenseitiger Abstände im wesentlichen horizontal in das Gehäuse hineinragen und die mit einer Rückseite enden,
c) und mit Halterungen, mit denen die Filterelemente innerhalb des Gehäuses gehalten sind.

Aus der EP 0 398 091 A1 ist eine solche Filtervorrichtung zur Reinigung von durch Staubpartikel verunreinigte Luft bekannt. Die Filtervorrichtung besitzt ein Gehäuse mit einer Vielzahl von Filterelementen. Jedes der Filterelemente ist ein permeabler Hohlzylinder. Unter Wahrung gegenseitiger Abstände werden sie durch drei Stützstangen, die um den Holzzylinder angeordnet sind, im Gehäuse gehalten. Die verunreinigte Luft durchdringt die Filter, wodurch sich an deren Oberfläche die Staubpartikel absetzen. Die gereinigte Luft strömt durch deren offene Vorder- bzw. Rückseite nach außen. Ist ein Filterelement verschmutzt, wird es zum Reinigen aus einer Tür herausgezogen. Durch seine Dünnwandigkeit und Länge ist es dabei kaum beherrschbar, so daß es leicht zu einem Abknicken kommen kann, insbesondere beim Einsetzen. In der DE-32 49 102 C2 ist weiterhin eine Filtervorrichtung zum Reinigen verunreinigter Luft oder anderer Gase von Staubpartikeln offenbart. In einem Gehäuse sind dabei eine Vielzahl von Filterelementen versetzt in einem nach unten zeigenden spitzen Neigungswinkel zur Horizontalen angeordnet. Die Filterelemente werden von einer Öffnung in der Vorderwand des Gehäuses durch einen Bügel gehalten. Der Bügel selbst besteht aus zwei gegenüberliegenden Stahlstreben, die an ihrem Ende durch eine Endplatte zusammengehalten werden. Ist ein Filterelement verunreinigt, wird ein Bolzen, der in der Endplatte verschraubt ist, gelöst und das nun frei liegende Filterelement herausgezogen. Auch hier besteht durch seine Dünnwandigkeit und Länge die Gefahr, daß es leicht zum Abknicken des Filterelementes kommen kann. Das Einsetzen ist daher mit Schwierigkeiten verbunden.

Der Erfindung liegt die Aufgabe zugrunde, die vorstehend genannten Nachteile bei einer Filtervorrichtung der eingangs genannten Art zu beseitigen, und eine Filtervorrichtung mit Gehäuse und in dem Gehäuse befindlichen Filterelementen zu schaffen, bei dem die Filterelemente sowohl beim Einsetzen in das Gehäuse als auch beim Herausziehen einfach und sicher verwendbar und beherrschbar sind.

Erfindungsgemäß wird die Aufgabe dadurch gelöst, daß jedem Filterelement als Halterung nur eine Stützstange zugeordnet ist, die oberhalb des Filterscheitels verläuft, und daß wenigstens im Bereich der Filterrückseite eine die Stützstange übergreifende Hängevorrichtung mit dem Filterelement verbunden ist, die von der Stützstange lösbar und entlang der Stützstange verschiebbar ist.

Die mit der Erfindung erzielten Vorteile bestehen insbesondere darin, daß jedes Filterelement beim Betrieb, Herausziehen und Einführen mit der Hängevorrichtung an der Stützstange abgefangen wird. Dadurch wird das Filterelement immer an wenigstens zwei Punkten gehalten und so eine Beschädigung durch ein Abknicken vermieden. Der Einbau lediglich einer einzigen Stützstange verbilligt außerdem die Baukosten des Filtergehäuses.

In weiterer Ausgestaltung endet die Filterrückseite frei vor der Gehäuserückwand. Das erspart insbesondere eine zweite hintere spezielle Öffnung mit einer Dichtung. Darüber hinaus ist die genaue Maßhaltigkeit der Länge des Filterelementes nicht mehr von so entscheidender Bedeutung.

Von Vorteil ist es, die Hängevorrichtung als Haken auszubilden. Ist das Filterelement sehr lang, können mehrere Haken über die Länge des Filterelementes verteilt angeordnet werden. Dadurch ist ein einfaches Einhängen, Halten und Gleiten auf der Stützstange möglich.

Vorteilhaft ist es, die Stützstange an der Vorder- und an der Rückwand des Gehäuses zu befestigen. Dadurch werden nicht nur zusätzliche Halte- oder Abhängekonstruktionen für jede Stützstange vermieden, sondern darüber hinaus die großflächige Vorder- und Rückwand und damit das gesamte Gehäuse stabilisiert.

Besonders vorteilhaft ist es, wenn ein Filterelement, das im wesentlichen gestaltet als ein vom Mantel her permeabler Hohlzylinder, eine wenigstens im Bereich der Rückseite angebrachte, eine Stützstange übergreifbare Hängevorrichtung besitzt, vorzugsweise einen Haken, die von einer Stützstange lösbar und entlang der Stützstange verschiebbar ist. Ist das Filterelement sehr lang, können noch weitere Hängevorrichtungen in Form von Haken vorgesehen werden. Dadurch ist es möglich, das Filterelement sicher und leicht auszuwechseln und das auch dort, wo die Filterelemente bisher mit zwei oder drei Stützstangen gehalten wurden.

Vorteilhaft ist es, wenn die Rückseite als ein Verschlußdeckel ausgebildet und die Vorderseite mit einer Dichtungsfläche versehen ist. Bei der Fertigung braucht dadurch nicht mehr so sehr auf die Maßhaltigkeit der Einbaulänge geachtet zu werden.

Durch seine besondere Ausgestaltung ist das Filterelement universell verwendbar, denn durch die Halterungsart und die verschlossene Rückseite ist es möglich, das Filterelement als Ersatzteil auch in unterschiedlichen Filtervorrichtungen einzusetzen.

Die Erfindung wird nachstehend an einem Ausführungsbeispiel näher erläutert. In der Zeichnung zeigen:
- Figur 1: eine Filtervorrichtung in schematischer, perspektivischer geschnittener Darstellung,
- Figur 2: ein Filterelement in schematischer, perspektivischer Darstellung.

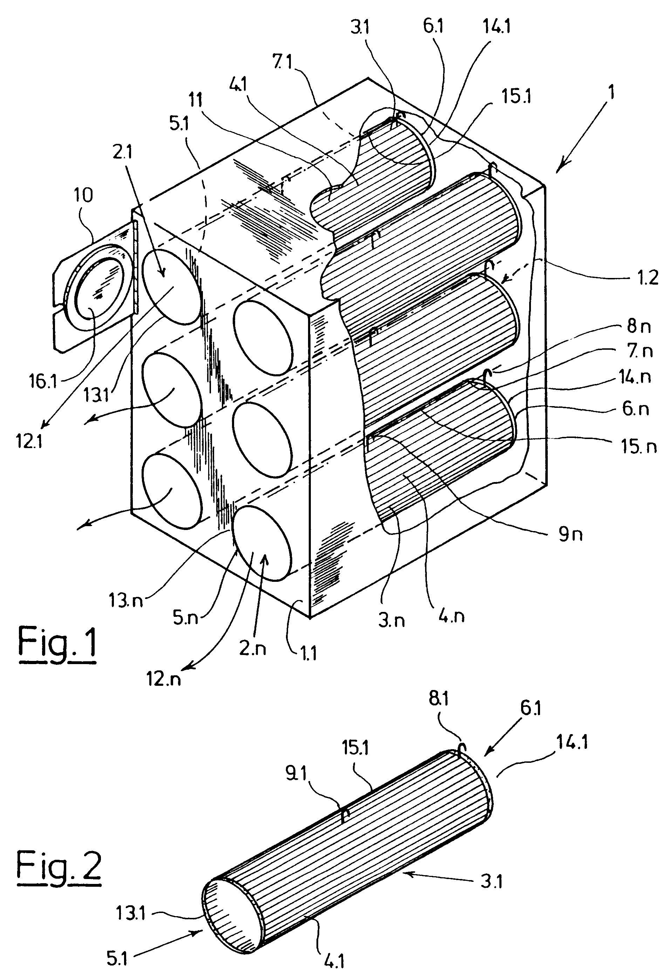

Hauptelemente einer Filtervorrichtung sind ein Gehäuse 1 und darin angeordnete Filterelemente 3.1, ... 3.n. Das Gehäuse 1 weist gemäß Figur 1 einen auf der Oberseite eingebrachten Staublufteintritt 11, eine Vorderwand 1.1 mit Filterzugängen 2.1, ... 2.n und eine Rückwand 1.2 auf. Jeder Filterzugang 2.1, ... 2.n ist zugleich ein Reinluftaustritt 12.1, ... 12.n. Hierzu kann jeder Filterzugang 2.1, ... 2.n mit einer Tür 10 verschlossen werden, die eine zugehörige Reinluftaustrittsöffnung 16.1 enthält und beim Schließen zugleich das dazugehörige Filterelement 3.1 festklemmt. Anstelle einer Tür 10 können die Filterelemente 3.1, ... 3.n mit anderen Festlegungselementen, z. B. Schraubverschlüssen festgeklemmt werden.

Die Filterelemente 3.1, ... 3.n bestehen, wie auch Figur 2 zeigt, aus einem Mantel 4.1, ... 4.n, der als ein permeabler Hohlzylinder ausgebildet ist, mit einer Vorderseite 5.1, ... 5.n und einer Rückseite 6.1, ... 6.n. Die Vorderseite 5.1, ... 5.n kann mit einer Dichtungsfläche 13.1, ... 13.n umgeben und die Rückseite 6.1, ... 6.n mit einem Verschlußdeckel 14.1, ... 14.n verschlossen sein. Die Dichtungsfläche 13.1, ... 13.n und der Verschlußdeckel 14.1, ... 14.n können dabei ein fester oder ein nachträglich auflegbarer Teil des Filterelementes 3.1, ... 3.n sein. Am Filterscheitel 15.1, ... 15.n ist wenigstens ein Haken 8.1, ... 8.n angeordnet, und zwar im Bereich der Rückseite 6.1, ... 6.n. Ist das Filterelement 3.1, ... 3.n sehr lang, ist es angebracht, noch einen weiteren Haken 9.1, ... 9.n anzuordnen, der gegebenenfalls noch durch weitere ergänzbar ist.

Ein so ausgebildetes Filterelement 3.1, ... 3.n wird durch den Filter-Zugang 2.1, ... 2.n in das Gehäuse 1 eingebracht. Über dem Filterscheitel 15.1, ... 15.n sind im Gehäuse 1 zwischen Vorder- und Rückwand 1.1, 1.2 unter Wahrung bestimmter Abstände Stützstangen 7.1, ... 7.n angeordnet. Auf einer dieser Stützstangen 7.1, ... 7.n wird der Haken 8.1, ... 8.n gehängt und dann das Filterelement 3.1, ... 3.n geschoben. Ist das Filterelement 3.1, ... 3.n sehr lang, wird unter Verwendung des zweiten Hakens 9.1, 9.2 das Filterelement 3.1, ... 3.n vollständig in das Gehäuse 1 eingebracht. Das vordere Ende des Filterelementes 3.1, ... 3.n wird dann beim Schließen der dazugehörigen Tür 10 festgeklemmt und durch die Dichtungsfläche 13.1, ... 13.n abdichtend gehalten.

Durch den staublufteintritt 11 wird eine mit Staubpartikeln verunreinigte Luft oder Gas in das Gehäuse 1 geleitet. Beim Durchströmen der Filterelemente 3.1, ... 3.n bleiben die Staubpartikel an deren permeablen Mänteln 4.1, ... 4.n haften und die gereinigte Luft kann durch die Reinluftaustritte 12.1, ... 12.n, die durch zugehörige Reinluft-Durchtrittsöffnungen 16.1 in der Tür 10 gewährleistet sind, austreten.

Ist der Filter 3.1 zu reinigen, wird das entsprechend vorher signalisiert. Die Tür 10 wird geöffnet und das Filterelement 3.1 freigegeben. Danach wird es aus dem Filter-Zugang 2.1 herausgezogen. Beim Herausziehen gleitet der Haken 8.1 auf der Stützstange 7.1 entlang und verhindert ein Pendeln des Filterelementes 3.1 im Inneren des Gehäuses 1. Ist der Haken 8.1 am Filter-Zugang 2.1 angelangt, wird das Filterelement 3.1 an mehreren Stellen unterstützt herausgehoben. Ist es gereinigt, wird es wie bereits beschrieben, wieder in das Gehäuse 1 eingeschoben. Sind mehrere Filterelemente 3.1, ... 3.n zu reinigen, vollzieht sich das wie oben beschrieben. Dadurch, daß die Rückseite 6.1, ... 6.n als Verschlußdeckel 14.1, ... 14.n ausgebildet ist, braucht zum einen die Rückseite 6.1, ... 6.n nicht in ein Dichtungssystem an der Rückwand 1.2 des Gehäuses 1 eingebracht werden und zum anderen kann jedes Filterelement 3.1, ... 3.n in jeden Filter-Zugang 2.1, ... 2.n des Gehäuses 1 eingeschoben werden.

### Bezugszeichenliste

- 1: Gehäuse
- 1.1: Vorderwand
- 1.2: Rückwand
- 2.1, ... 2.n: Filter-Zugang
- 3.1, ... 3.n: Filterelement
- 4.1, ... 4.n: Mantel
- 5.1, ... 5.n: Vorderseite
- 6.1, ... 6.n: Rückseite
- 7.1, ... 7.n: Stützstange
- 8.1, ... 8.n: Haken
- 9.1, ... 9.n: Haken
- 10: Tür
- 11: Staublufteintritt
- 12.1, ... 12.n: Reinluftaustritt
- 13.1, ... 13.n: Dichtungsfläche
- 14.1, ... 14.n: Verschlußdeckel
- 15.1, ... 15.n: Filterscheitel
- 16.1: Reinluftaustrittsöffnung

## Patentansprüche

1. Filtervorrichtung zur Reinigung von mit Partikeln verunreinigter Luft oder anderer Gase, mit folgenden Einzelteilen:
a) einem kastenförmigen Gehäuse (1) mit einer Vorderwand (1.1), die mit einer Vielzahl von Filter-Zugängen (2.1, ... 2.n) ausgestattet ist,
b) einer Vielzahl von Filterelementen (3.1, ... 3.n), die im wesentlichen vom Mantel (4.1, ... 4.n) her permeable Hohlzylinder darstellen, die jeweils mit ihrer Vorderseite (5.1, ... 5.n) im Bereich eines Filter-Zuganges (2.1, ... 2.n) festlegbar sind und im eingebauten Zustand unter Wahrung gegenseitiger Abstände im wesentlichen horizontal in das Gehäuse (1) hineinragen und die mit einer Rückseite (6.1, ... 6.n) enden,
c) und mit Halterungen, mit denen die Filterelemente (3.1, ... 3.n) innerhalb des Gehäuses (1) gehalten sind,
dadurch gekennzeichnet, daß jedem Filterelement (3.1, ... 3.n) als Halterung nur eine Stützstange (7.1, ... 7.n) zugeordnet ist, die oberhalb des Filterscheitels (15.1, ... 15.n) verläuft, und daß wenigstens im Bereich der Filterrückseite (6.1, ... 6.n) eine die Stützstange (7.1, ... 7.n) übergreifende Hängevorrichtung (8.1, ... 8.n; 9.1, ... 9.n) mit dem Filterelement (3.1, ... 3.n) verbunden ist, die von der Stützstange (7.1, ... 7.n) lösbar und entlang der Stützstange (7.1, ... 7.n) verschiebbar ist.

2. Filtervorrichtung nach Anspruch 1, dadurch gekennzeichnet, daß die Filterrückseite (6.1, ... 6.n) frei vor der Gehäuserückwand (1.2) endet.

3. Filtervorrichtung nach Anspruch 1 oder 2, dadurch gekennzeichnet, daß die Hängevorrichtung wenigstens ein Haken (8.1, ... 8.n; 9.1, ... 9.n) ist.

4. Filtervorrichtung nach Anspruch 1 bis 2, dadurch gekennzeichnet, daß die Stützstange (7.1, ... 7.n) an der Vorderwand (1.1) und an der Rückwand (1.2) des Gehäuses (1) befestigt ist.

5. Filterelement zum Einbau in eine Filtervorrichtung nach einem der vorhergehenden Ansprüche, gestaltet im wesentlichen als ein vom Mantel (4.1, ... 4.n) her permeabler Hohlzylinder, gekennzeichnet durch wenigstens eine im Bereich der Rückseite (6.1, ... 6.n) angebrachte, eine Stützstange (7.1, ... 7.n) übergreifbare Hängevorrichtung, die vorzugsweise wenigstens ein Haken (8.1, ... 8.n; 9.1, ... 9.n) ist und die von einer Stützstange (7.1, ... 7.n) lösbar und entlang der Stützstange (7.1, ... 7.n) verschiebbar ist.

6. Filterelement nach Anspruch 5, dadurch gekennzeichnet, daß die Rückseite (6.1, ... 6.n) als ein Verschlußdeckel (14.1, ... 14.n) ausgebildet und die Vorderseite (5.1, ... 5.n) mit einer Dichtungsfläche (15.1, ... 15.n) versehen ist.

## Claims

1. A filter device for cleaning particle-contaminated air or other gases and having the following parts:
a) a box-like casing (1) having a front wall (1.1) formed with a number of filter accesses (2.1, ... 2.n);
b) a number of filter elements (3.1, ... 3.n) consisting basically of hollow cylinders permeable from the envelope (4.1, ... 4.n), each hollow cylinder being securable by way of its front (5.1, ... 5.n) near a filter access (2.1, ... 2n) and extending when fitted substantially horizontally into the casing (1) at predetermined intervals from one another and terminating in a back (6.1, ... 6.n)
c) and having retaining means for retaining the filter elements (3.1, ... 3.n) in the casing (1),
characterised in that just a single support rod (7.1, ... 7n) is associated with each filter element (3.1, ... 3n) as retaining means and extends above the filter apex (15.1, ... 15n) and at least near the filter back (6.1, ... 6.n) a hanging device (8.1, ... 8.n; 9.1, ... 9.n) which engages over the support rod (7.1, ... 7.n) is connected to the filter element (3.1, ... 3.n), is releasable from the support rod (7.1, ... 7.n) and is displaceable therealong.

2. A filter device according to claim 1, characterised in that the filter back (6.1, ... 6.n) ends short of the casing back wall (1.2).

3. A filter device according to claim 1 or 2, characterised in that the hanging device is at least one hook (8.1, ... 8n; 9.1, ... 9.n).

4. A filter device according to claims 1 to 2, characterised in that the support rod (7.1, ... 7.n) is secured to the front wall (1.1) and to the back wall (1.2) of the casing (1).

5. A filter element for fitting into a filter device according to any of the previous claims and embodied basically as a hollow cylinder permeable from the envelope (4.1, ... 4.n), characterised by at least one hanging device which is disposed near the back (6.1, ... 6.n), engages over a support rod (7.1, ... 7.n), is preferably at least one hook (8.1, ... 8.n; 9.1, ... 9.n), is releasable from a support rod (7.1, ... 7.n) and is displaceable therealong.

6. A filter element according to claim 5, characterised in that the back (6.1, ... 6.n) is in the form of a closure lid (14.1, ... 14.n) and the front (5.1, ... 5.n) has a sealing surface (15.1, ... 15.n).

## Revendications

1. Appareil de filtration destiné à épurer de l'air ou d'autres gaz pollués par des particules, comprenant les éléments suivants:
a) un carter en forme de caisson (1) comprenant une paroi avant (1, 1) dans laquelle est ménagée une série d'entrées (2.1 ... 2.n) de filtres,
b) une série d'éléments de filtrage (3.1, ... 3.n) qui représentent sensiblement des cylindres creux, perméables à partir de l'enveloppe (4.1, ... 4.n), qui peuvent être fixés chacun par son côté avant (5.1, ... 5.n) dans la zone d'une entrée (2.1, ... 2.n) de filtre et qui font saillie à l'état monté, en étant maintenus à distance les uns des autres, sensiblement à l'horizontale dans le caisson (1) et qui se terminent par un côté arrière (6.1, ... 6.n),
c) et des supports au moyen desquels les éléments de filtrage (3.1, ... 3.n) sont tenus à l'intérieur du caisson (1),
caractérisé en ce que seule une tige de support (7.1, ... 7.n), qui est située au-dessus du sommet (15.1, ... 15.n) de filtre, est associée comme support à chaque élément de filtrage (3.1, ... 3.n) et
en ce qu'un dispositif de suspension (8.1, ... 8.n; 9.1, ... 9.n) s'accrochant sur la tige de support (7.1, ... 7.n) et qui peut être détaché de la tige de support (7.1, ... 7.n) et être coulissé le long de la tige de support (7.1, ... 7.n), est relié à l'élément de filtrage (3.1, ... 3.n) au moins dans la zone du côté arrière (6.1, ... 6.n) du filtre.

2. Appareil de filtration selon la revendication 1, caractérisé en ce que le côté arrière (6.1, ... 6.n) de filtre se termine à distance de la paroi arrière (1.2) du caisson.

3. Appareil de filtration selon la revendication 1 ou 2, caractérise en ce que le dispositif de suspension est au moins un crochet (8.1, ... 8.n; 9.1, ... 9.n).

4. Appareil de filtration selon l'une des revendications 1 ou 2, caractérisé en ce que la tige de support (7.1, ... 7.n) est fixée à la paroi avant (1.1) et à la paroi arrière (1.2) du caisson (1).

5. Elément de filtre à monter dans un appareil de filtration selon l'une des revendications précédentes, dont la configuration est sensiblement un cylindre creux perméable à partir de l'enveloppe (4.1, ... 4.n), caractérisé par un dispositif de suspension qui est monté dans la zone du côté arrière (6.1, ... 6.n), qui peut saisir par le haut une tige de support (7.1, ... 7.n), qui est de préférence au moins un crochet, (8.1, ... 8.n; 9.1, ... 9.n) et qui peut être détaché de la tige de support (7.1, ... 7.n) et peut coulisser le long de la tige de support (7.1, ... 7.n).

6. Elément de filtre selon la revendication 5, caractérisé en ce que le côté arrière (6.1, ... 6.n) est réalisé sous la forme d'un couvercle de fermeture (14.1, ... 14.n) et en ce que le côté avant (5.1, ... 5.n) est pourvu d'une surface de joint étanche (15.1, ... 15.n).
